(19) **Europäisches Patentamt**
**European Patent Office**
**Office européen des brevets**

(11) Veröffentlichungsnummer: **0 196 506**
**A2**

(12) # EUROPÄISCHE PATENTANMELDUNG

(21) Anmeldenummer: 86103263.9

(22) Anmeldetag: 11.03.86

(51) Int. Cl.⁴: **C02F 1/52 , C02F 3/28**

(30) Priorität: 27.03.85 DE 3511158

(43) Veröffentlichungstag der Anmeldung:
08.10.86 Patentblatt 86/41

(84) Benannte Vertragsstaaten:
AT BE CH DE FR GB IT LI NL

(71) Anmelder: **Linde Aktiengesellschaft**
**Abraham-Lincoln-Strasse 21**
**D-6200 Wiesbaden(DE)**

(72) Erfinder: **Morper, Manfred, Dr. rer. nat.**
**Zugspitzstrasse 13**
**D-8035 Gauting(DE)**

(74) Vertreter: **Schaefer, Gerhard, Dr.**
**Linde Aktiengesellschaft Zentrale Patentabteilung**
**D-8023 Höllriegelskreuth(DE)**

(54) **Verfahren und Vorrichtung zum Entfernen von Sulfat aus Abwasser.**

(57) Die Erfindung betrifft ein Verfahren zum Entfernen von Sulfat aus Abwasser, bei dem dem Abwasser in einem Mischbehälter 1 über eine Zuführungsleitung 10 ein Fällungsmittel zugegeben wird. Um dabei auf einfache und wirtschaftliche Weise eine effektive Elimination von Sulfat zumindest auf Konzentrationen unterhalb der jeweils zulässigen oder tolerierbaren Werte zu erreichen, ist vorgesehen, als Fällungsmittel eine bleihaltige Dosierlösung zu verwenden, in einer dem Mischbehälter 1 nachgeschalteten Abtrenneinrichtung 3 ausgefälltes Bleisulfat abzutrennen und über eine Ableitung 4 abzuziehen und gefälltes Abwasser in einem Schlammbettreaktor 6 anaerobe weiterzubehandeln.

EP 0 196 506 A2

Verfahren und Vorrichtung zum Entfernen von Sulfat aus Abwasser

Die Erfindung betrifft ein Verfahren zum Entfernen von Sulfat aus Abwasser, bei dem dem Abwasser ein Fällungsmittel zugegeben wird, sowie eine Vorrichtung zur Durchführung des Verfahrens.

Bekanntlich wirkt sich Sulfat im Abwasser in höheren Konzentration nachteilig auf Kanalisationen und Kläranlagen aus. So sind bereits Sulfatgehalte über 200 mg/l betonkorrodierend. Außerdem beeinträchtigen auf kommunalen Kläranlagen Sulfatgehalte über 500 mg/l die Schlammfaulung, da durch biologische Reduktion Schwefelwasserstoff entsteht, der seinerseits die Faulgasverwertung erschwert. So können organisch hochbelastete Industrieabwässer bei hohen Sulfatgehalten nicht anaerob abgebaut werden, da dann die Sulfatreduktion gegenüber der Methanisierung bevorzugt abläuft.

Eine gewisse Sulfatelimination ist durch Zugabe von Calciumionen in Abwasser möglich, wodurch Sulfatgehalte bis ca. 1400 mg/l durch Gipsfällung erreicht werden. Ansonsten werden überhöhte Sulfatkonzentrationen durch Verdünnung mit sulfatfreiem Wasser, z.B. Kühlwasser, herabgesetzt. Zusammen mit dem Verdünnungswasser müssen dann aber große Abwassermengen behandelt werden, die entsprechend große Reinigungsanlagen erfordern. Außerdem wird die Gewässerbelastung durch Sulfat dadurch nicht verringert.

Der Erfindung liegt die Aufgabe zugrunde, ein Verfahren der eingangs genannten Art sowie eine Vorrichtung zur Durchführung des Verfahrens so auszugestalten, daß auf einfache und wirtschaftliche Weise eine effektive Elimination von Sulfat zumindest auf Konzentrationen unterhalb der jeweils zulässigen oder tolerierbaren Werte erreicht werden kann.

Diese Aufgabe wird erfindungsgemäß dadurch gelöst, daß als Fällungsmittel eine bleihaltige Dosierlösung verwendet wird, ausgefälltes Bleisulfat abgetrennt und das gefällte Abwasser anaerob weiterbehandelt wird.

Mit dieser Verfahrensweise macht sich die Erfindung den Umstand zunutze, daß Blei zwei schwerlösliche Schwefelverbindungen, das Bleisulfat und das noch schwerer lösliche Bleisulfid bildet. Durch das Zumischen der bleihaltigen Dosierlösung verbindet sich zunächst das im Abwasser vorhandene Sulfat mit dem Blei der Dosierlösung zu schwer löslichem Bleisulfat, das dann beispielsweise in einem Absetzvorgang aus dem Abwasser abgetrennt wird. Bei der Weiterbehandlung des gefällten Abwassers, das in der Regel noch einen Restsulfatbehalt und eine dem jeweiligen Milieu entsprechende geringe Menge an gelöstem Blei enthält, unter anaeroben Bedingungen wird dann das restliche Sulfat weitgehend zu Sulfid reduziert, das sich mit dem gelösten Blei sofort zu dem praktisch unlöslichen Bleisulfid verbindet.

Vorteilhafterweise wird das gefällte Abwasser bei der Weiterbehandlung durch Anaerobschlamm hindurchgeleitet. Der Anaerobschlamm kann dabei beispielsweise in einem anaeroben Sorptionsreaktor angeordnet sein. Im Anaerobschlamm wird zum einen das unlösliche Bleisulfid zurückgehalten und zum anderen wird durch die adsorptive Eigenschaft der Biomasse auch überschüssiges Blei aus dem gefällten Abwasser vollständig eliminiert. Damit kann abhängig von der Bleidosierung ins Abwasser nicht nur eine weitgehende Elimination des Sulfats erreicht, sondern auch eine vollständige Entfernung des zugegebenen Fällungsmittels Blei, das als toxisches Schwermetall das ablaufende Abwasser belasten würde, sichergestellt werden. Nach Durchlauf der Fällungs- und Sorptionsstufe ist das ehemals stark sulfathaltige Abwasser jeder herkömmlichen anaeroben und aeroben biologischen Reinigung zugänglich.

Im Hinblick auf solche anschließende biologische Reinigung des gefällten Abwassers wird gemäß einer vorteilhaften Ausbildung des Erfindungsgedankens als bleihaltige Dosierlösung Bleiacetat und/oder Bleiformiat und/oder Bleinitrat verwendet. Das mit dem Blei zugeführte Acetat, Formiat oder Nitrat verschwindet in der anaeroben und/oder aeroben Reinigungsstufe durch biologischen Abbau und verursacht somit keine sekundäre Abwasserbelastung.

Um Fällungsmittel zu sparen und um eine möglichst weitgehende Entfernung des toxischen Schwermetalls Blei aus dem ablaufenden Abwasser gewährleisten zu können, ist es außerdem vorteilhaft, mit der Dosierlösung dem Abwasser Blei im unterstöchiometrischen Verhältnis zum Sulfat zuzusetzen. Dadurch kann zwar eine vollständige Sulfatentfernung nicht immer erzielt werden, aber Bleiüberdosierungen können ausgeschlossen werden.

Eine solche Arbeitsweise ist besonders dann zweckmäßig, wenn eine vollständige Sulfatentfernung auch nach den gesetzlichen Vorschriften nicht unbedingt erforderlich ist.

Da das ausgefällte Bleisulfat sowie der mit Bleisulfid angereicherte Anaerobschlamm hochbleihaltige Produkte sind, ist es weiterhin vorteilhaft, das ausgefällte, abgetrennte Bleisulfat sowie den bei der anaeroben Weiterbehandlung des gefällten Abwassers anfallenden bleihaltigen Anaerobschlamm einer Bleiwiedergewinnung, beispielsweise in einer Bleihütte, zuzuführen. Durch die Wiederaufbereitung dieser bleihaltigen Produkte können dann die Kosten für das Fällungsmittel beträchtlich gesenkt werden.

Eine Vorrichtung zur Durchführung des erfindungsgemäßen Verfahrens umfaßt einen Mischbehälter für die Fällungsmittelzugabe mit einer Zuleitung für zu behandelndes Abwasser und mit einer Zuführungsleitung für ein Fällungsmittel. Erfindungsgemäß ist eine solche Vorrichtung dadurch gekennzeichnet, daß die Zuführungsleitung für das Fällungsmittel an einen Vorratsbehälter für bleihaltige Dosierlösung angeschlossen ist und dem Mischbehälter eine Abtrenneinrichtung mit einer Ableitung für ausgefälltes Sulfat und der Abtrenneinrichtung ein Anaerobreaktor für die Weiterbehandlung gefällten Abwassers nachgeschaltet ist. Die Abtrenneinrichtung für ausgefälltes Bleisulfat kann beispielsweise als einfacher Absetzbehälter ausgebildet sein. In dem Mischbehälter ist zweckmäßigerweise eine Rühreinrichtung vorgesehen, mit der das zulaufende Abwasser und die bleihaltige Dosierlösung vermischt werden. Die Größe des Mischbehälters kann dabei klein gehalten werden, da die Bildung von schwer löslichem Bleisulfat eine spontan ablaufende Reaktion ist.

Der für die Weiterbehandlung des gefällten Abwassers an die Fällungsstufe anschließende Anaerobreaktor ist vorteilhafterweise als Schlammbettreaktor zur Durchführung einer aneroben Sorption ausgebildet. Dieser Schlammbettreaktor hat die Aufgabe, sowohl das sich unter anaeroben Bedingungen aus dem im Abwasser vorhandenen Sulfat bildende Bleisulfid im Anaerobschlamm einzulagern, als auch überschüssiges Blei aus dem Abwasser zu eliminieren und in so hoher Konzentration anzureichern, daß dabei ein für die Bleirückgewinnung nutzbares Produkt entsteht und die in einer nachfolgenden anaeorben und/oder aeroben biologischen Reinigungsstufe anfallenden Schlämme bleifrei sind.

Ein solcher Schlammbettreaktor weist im unteren Bereich eine Mischkammer mit Rühreinrichtung auf, auf die eine kegelstumpfförmig sich nach oben erweiternde Sedimentationskammer aufgesetzt ist. Die Zuleitung des zu behandelnden Abwassers sowie des zur Ausbildung des Schlammbetts erforderlichen anaeroben Schlamms, der z.B. aus einem kommunalen Faulturm abgezogen wird, erfolgt unten in die Mischkammer, in der mit Hilfe der Rühreinrichtung eine Durchmischung zwischen Abwasser und Schlamm durchgeführt wird.

In der oberen, sich erweiternden Sedimentationskammer verlangsamt sich die Geschwindigkeit des Auftriebs des suspendierten Schlamms durch den sich vergrößernden Querschnitt, so daß sich im oberen Teil der Sedimentationskammer allmählich eine Zone ausbildet, die frei von Schlamm ist und aus der das von bleihaltigem Schlamm befreite Abwasser abgezogen werden kann. Der Abzug des mit Blei angereicherten Schlamms erfolgt vom unteren Teil der Sedimentationskammer.

Gemäß einer weiteren vorteilhaften Ausgestaltung der Vorrichtung sind die Ableitung des Anaerobreaktors für bleihaltigen Anaerobschlamm sowie die Ableitung für ausgefälltes Bleisulfat der Abtrenneinrichtung an eine Aufbereitungseinrichtung für die Bleiwiedergewinnung angeschlossen.

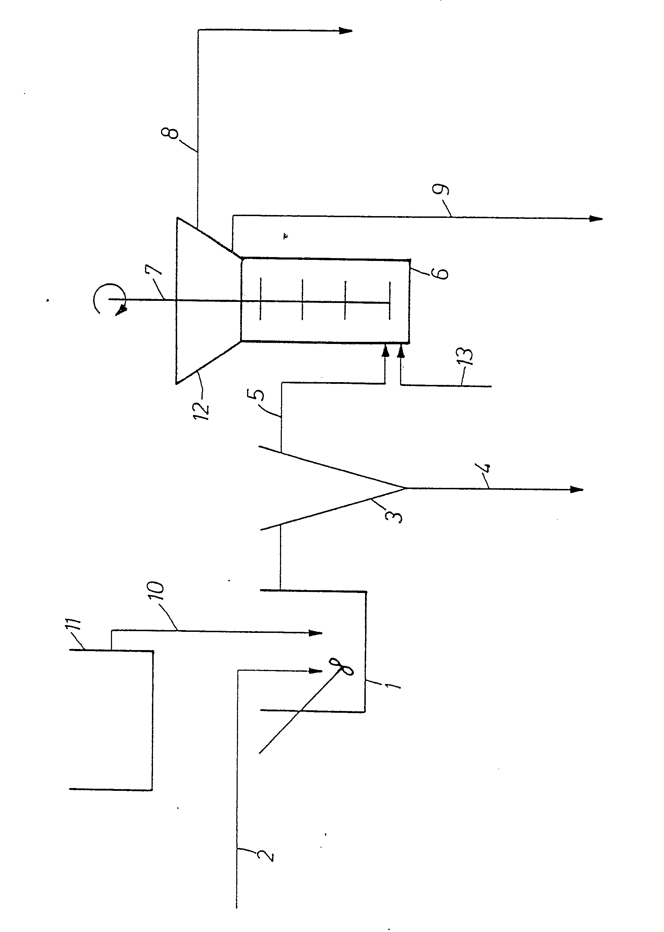

Nachfolgend ist ein in der Zeichnung schematisch dargestelltes Ausführungsbeispiel einer Vorrichtung zur Durchführung des erfindungsgemäßen Verfahrens näher beschrieben.

In der Figur ist mit 1 eine Mischkammer bezeichnet, in die zu behandelndes, einen hohen Sulfatgehalt aufweisendes Abwasser über eine Zuleitung 2 eingeleitet wird. Abwässer mit hohen Sulfatgehalten fallen beispielsweise in der Nahrungsmittelindustrie, bei der Hefeherstellung, der Speiseölgewinnung oder Proteinproduktion an. Zur Verringerung des Sulfatgehaltes auf tolerierbare Werte wird in den Mischbehälter 1 über eine Zuführungsleitung 10 eine bleihaltige Dosierlösung aus einem Vorratsbehälter 11 zugeführt und über eine Rühreinrichtung mit dem Abwasser gründlich vermischt. Dadurch bildet sich im Abwasser - schwer lösliches Bleisulfat.

Aus dem Mischbehälter 1 wird das Abwasser zusammen mit dem gebildeten Bleisulfat in eine Abtrenneinrichtung 3 eingeleitet, die im vorliegenden Fall als ein einfaches Absetzbecken ausgebildet ist. Das schwer lösliche Bleisulfat setzt sich im Absetzbecken 3 nach unten ab und wird über eine Ableitung 4 aus dem Absetzbecken ausgetragen.

Da die bleihaltige Dosierlösung zur Vermeidung einer Bleiüberdosierung vorteilhafterweise mit einem Bleigehalt im unterstöchiometrischen Verhältnis zum Sulfat verwendet wird, enthält das aus dem Absetzbecken 3 über eine Leitung 5 abfließende und von schwer löslichem Bleisulfat befreite Abwasser noch einen Restanteil von Sulfat sowie eine dem jeweiligen Milieu entsprechende geringe Menge an gelöstem Blei. Zur Weiterbehandlung wird das Abwasser deshalb über die Leitung 5 einem Anaerobreaktor 6 zugeleitet, der zweckmäßigerweise als ein mit anaerobem Schlamm gefüllter Sorptionsreaktor ausgebildet ist. Unter anaeroben Bedingungen wird dann das Sulfat zu Sulfid reduziert, das sich mit dem gelösten Blei sofort zu dem praktisch unlöslichen Bleisulfid verbindet. Dieses wird im Schlamm des Sorptionsreaktors 6 zurückgehalten und kann mit diesem vom Abwasser abgetrennt werden. Außerdem wird überschüssiges Blei durch die adsorptiven Eigenschaften der im Sorptionsreaktor vorhandenen Biomasse vollständig aus dem Abwasser eliminiert. Damit kann das in der Fällungs-und Sorptionsstufe behandelte Abwasser anschließend einer anaeroben und/oder aeroben biologischen Reinigung zur Elimination der organischen Schmutzfracht zugeführt werden.

Gemäß der Figur weist ein solcher Schlammbettreaktor im unteren Bereich eine Mischkammer 6 mit Rühreinrichtung 7 und im oberen Bereich eine sich kegelstumpfförmig nach oben erweiternde Sedimentationskammer 12 auf. Die Verbindungsleitung 5 vom Absetz becken 3 sowie eine Schlammzuleitung 13 für anaeroben Schlamm sind unten an der Mischkammer 6 angeschlossen. Durch die langsam laufende Rühreinrichtung 7 wird Abwasser und anaerober Schlamm 10 so vermischt, daß keine Kurzschlußströmungen durch Kanalbildung entstehen. In der Sedimentationskammer 12, trennt sich Abwasser und Schlamm, da sich aufgrund des sich erweiternden Querschnitts die Geschwindigkeit des Auftriebs des suspendierten Schlamms allmählich verlangsamt. Das von bleihaltigem Schlamm befreite Abwasser wird über eine im oberen Bereich der Sedimentationskammer 12 angeschlossene Ableitung 8 abgeleitet, während der bleihaltige Anaerobschlamm vom unteren Bereich der Sedimentationskammer 12 über eine Schlammableitung 9 abgezogen wird.

Da sowohl der mit Blei angereicherte Schlamm des Anaerobreaktors 6 als auch das in der Absetzkammer 3 abgesetzte Bleisulfat hochbleihaltige Produkte sind, ist es zweckmäßig, sowohl die Ableitung 9 des Anaerobreaktors 6 für bleihaltigen Aanerobschlamm sowie die Ableitung 4 des Absetzbeckens 3 für ausgefälltes Bleisulfat an eine Aufbereitungseinrichtung für die Bleiwiedergewinnung anzuschließen.

Das nachfolgende Zahlenbeispiel soll die Wirksamkeit des erfindungsgemäßen Verfahrens aufzeigen:

Ausgegangen wird dabei von einem Abwasser mit einem überhöhten Sulfatgehalt von 2500 mg $SO_4^{2-}$/l, das in einer Menge von 100 m³/Tag anfällt. Ausgegangen wird dabei weiterhin davon, daß für die Einleitung dieses Abwassers in eine Kanalisation ein Sulfatgehalt ≤ 400 mg/l gefordert wird.

Dem Abwasser wird im unterstöchiometrischen Maß eine Bleiacetatlösung zudosiert, hergestellt durch Auflösen von $Pb(CH_3CO_2)_2 \bullet 3H_2O$ oder durch Umsetzung von PbO mit verdünnter Essigsäure.

Löslichkeitsprodukt $PbSO_4$ bei 18°C = $1{,}06 \bullet 10^{-8}$.

Die Zugabe von 794 kg $Pb(CH_3CO_2)_2 \bullet 3H_2O$ [1,8 m³ mit 440 g/l] führt rechnerisch zu einem Restsulfatgehalt von ca. 500 mg/l und einem Restbleigehalt von

$$Pb = \frac{1{.}06 \cdot 10^{-8}}{0{,}026} = 4{,}08 \cdot 10^{-7} \; Mol/l = 84 \; \mu g \; Pb/l.$$

Es werden 631 kg/d Bleisulfat gefällt und zur Wiederaufbereitung abgegeben.

Das gefällte Abwasser wird einem Schlammbettreaktor zugeführt. Dort wird das mit dem Blei zugeführte Acetat weitgehend anaerob abgebaut und dient zur Ernährung der anaeroben Biomasse. Außerdem werden, falls nicht im Abwasser vorhanden, geringe Mengen an N-und P-haltigen Chemikalien als Nährstoffe zudosiert.

Im Schlammbettreaktor (Reaktorvolumen ca. 20 m³) wird das restliche Sulfat zum Teil zu Sulfid reduziert, z.B. zu 50 %. Bei dem äußerst geringen Löslichkeitsprodukt von Bleisulfid von $3,4 \cdot 10^{-28}$ ergibt sich eine rechnerische Blei-restkonzentration von

$$Pb = \frac{3,4 \cdot 10^{-28}}{7,8 \cdot 10^{-3}} = 4,36 \cdot 10^{-26} \; Mol/l = 9,0 \cdot 10^{-24} \; g/l.$$

einer Bleiwiedergewinnungsanlage zugeführt werden.

## Ansprüche

1. Verfahren zum Entfernen von Sulfat aus Abwasser, bei dem dem Abwasser ein Fällungsmittel zugegeben wird, dadurch gekennzeichnet, daß als Fällungsmittel eine bleihaltige Dosierlösung verwendet wird, ausgefälltes Bleisulfat abgetrennt und gefälltes Abwasser anaerob weiterbehandelt wird.

2. Verfahren nach Anspruch 1, dadurch gekennzeichnet, daß bei der Weiterbehandlung das gefällte Abwasser durch Anaerobschlamm hindurchgeleitet wird.

3. Verfahren nach Anspruch 1 oder 2, dadurch gekennzeichnet, daß als bleihaltige Dosierlösung Bleiacetat und/oder Bleiformiat und/oder Bleinitrat verwendet wird.

4. Verfahren nach einem der Ansprüche 1 bis 3, dadurch gekennzeichnet, daß mit der Dosierlösung dem Abwasser Blei im unterstöchiometrischen Verhältnis zum Sulfat zugesetzt wird.

5. Verfahren nach einem der Ansprüche 1 bis 4, dadurch gekennzeichnet, daß das ausgefällte und abgetrennte Bleisulfat sowie der bei der anaeroben Weiterbehandlung des gefällten Abwassers anfallende bleihaltige Anaerobschlamm

6. Vorrichtung zur Durchführung des Verfahrens nach einem der Ansprüche 1 bis 5 mit einem Mischbehälter für die Fällungsmittelzugabe, mit einer Zuleitung für zu behandelndes Abwasser und mit einer Zuführungsleitung für ein Fällungsmittel, dadurch gekennzeichnet, daß die Zuführungsleitung (10) für das Fällungsmittel an einen Vorratsbehälter (11) für bleihaltige Dosierlösung angeschlossen ist und dem Mischbehälter (1) eine Abtrenneinrichtung (3) für ausgefälltes Bleisulfat mit einer Ableitung (4) für Bleisulfat und der Abtrenneinrichtung (3) ein Anaerobreaktor (5) für die Weiterbehandlung gefällten Abwassers nachgeschaltet ist.

7. Vorrichtung nach Anspruch 6, dadurch gekennzeichnet, daß der Anaerobreaktor (6) als Schlammbettreaktor ausgebildet ist.

8. Vorrichtung nach Anspruch 6 oder 7, dadurch gekennzeichnet, daß die Ableitung (9) des Anaerobreaktors (6) für bleihaltigen Anaerobschlamm sowie die Ableitung (4) für ausgefälltes Bleisulfat der Abtrenneinrichtung (3) an eine Aufbereitungseinrichtung für die Bleiwiedergewinnung angeschlossen sind.

0 196 506